# EUROPEAN PATENT APPLICATION

(11) **EP 4 578 833 A1**
(43) Date of publication of application: **02.07.2025**
(21) Application number: 24223091.0
(22) Date of filing: 23.12.2024
(51) Int. Cl.: C02F 1/04, B01D 1/00, B01D 1/16, C02F 1/12, C02F 1/36

(54) **PLANT FOR THE TREATMENT OF INDUSTRIAL WASTEWATER**

(30) Priority: 28.12.2023 IT 202300028281
(71) Applicant: WDTEC S.r.l., 35131 Padova (PD) (IT)
(72) Inventor: CASTELLI, Gianluca, 35020 Ponte San Nicolò (PD) (IT)
(74) Representative: Pretato, Filippo

(57) **Abstract**

Plant (1) for the treatment of industrial wastewater, configured to receive from an inlet section (2) a wastewater (R) to be treated and to send towards a first outlet section (3) a distilled fluid (F) and towards a second outlet section (4) a mass of concentrate (C), said plant (1) comprising at least one evaporator apparatus (10) interposed between said inlet section (2) and said first and said second outlet sections (3, 4), comprising a main body (11), which extends along a main development axis (X) starting from a bottom wall (13), and defines within it a housing volume (12), intended to contain at least said wastewater (R) to be treated; heating means, operationally associated with said evaporator apparatus and configured to heat said wastewater (R) to be treated; said evaporator apparatus (10) comprises means for generating ultrasound (14) mechanically associated with said main body (11) and configured to generate, in said housing volume, vibrations with a frequency between 1 kHz and 100 kHz; said means for generating ultrasound being configured to cooperate with said heating means to bring said wastewater (R) at least partially to evaporation.

## Description

### Field of application of the invention

The present invention finds place in the technical field of fluid treatment, in particular to separate a vector fluid intended to be reused from one or more polluting and/or unwanted elements present within it.

More in detail, the present invention concerns a plant for the treatment of industrial wastewater, which can be advantageously used in industry to treat wastewater of any nature and type.

Therefore, the present invention finds advantageous use in the technical field of production and marketing of plants and apparatus for the treatment of industrial fluids and also finds use in any technical field that requires the treatment of at least one fluid.

### State of the art

As is known, every industrial field, whether productive or transformation, uses water or other vector fluids to create products or transform others.

During normal industrial processes, the vector fluid is contaminated by one or more pollutants, which define the so-called wastewater.

Such wastewater must be treated in order to remove the pollutants and recover the vector fluid (normally water) and/or the pollutants themselves if they contain high concentrations of precious elements.

Furthermore, nowadays there is a particularly strong need to treat wastewater in order to limit as much as possible the environmental impact of each industrial process.

To date, many different types of wastewater treatment plants are known that use different physical principles to remove the above pollutants from the carrier fluid.

A type of plant for the treatment of wastewater known in the relevant technical field consists of plants equipped with evaporator systems.

Plants equipped with evaporator systems constitute one of the most widely used technical solutions, in particular for the treatment of products with a high concentration of pollutants, and for recovering raw materials included in the polluting substances.

A plant with an evaporator apparatus normally comprises an inlet section for at least one flow of fluid to be treated, an evaporator apparatus connected to the inlet section, a first outlet section for a flow of concentrated fluid, fluidically connected to the evaporator apparatus, and a second outlet section for a flow of distilled or condensed fluid.

More in detail, the evaporator apparatus comprises a containment body, into which a predetermined mass of fluid to be treated is poured, and configured to allow the separation of the vector fluid (i.e. the distilled fluid) from the mass of polluting substances (i.e. the concentrated fluid) by evaporation.

More in detail, the first outlet section for the concentrated fluid flow is provided at a lower portion of the containment body and the second outlet section for the distilled fluid flow is provided at an upper portion of the containment body.

The evaporator apparatus also comprises heating means, such as a heat exchanger, configured to make the mass of fluid to be treated reach the evaporation temperature.

During evaporation, the vector fluid changes phase from liquid to gaseous, rising in the containment body, towards the second outlet section, while the polluting substances (normally heavier and/or solid) remain on the bottom in correspondence with the first outlet section.

Once a predetermined concentration of pollutants has been reached in the concentrated fluid inside the containment body, a pump is activated to remove the latter from the containment body and send it to a suitable collection station.

However, in practice such plant has proved to be not free from drawbacks.

The main drawback lies in the fact that the evaporator apparatus requires a large amount of energy to bring the fluid to be treated to evaporation temperature.

In order to overcome this drawback, the use of vacuum evaporator devices is known in the relevant technical field.

In more detail, the apparatus provides that the containment body is hermetically sealed with respect to the external environment and comprises suitable suction means capable of generating a vacuum inside the containment body itself.

As is known, the evaporation of the same fluid occurs at lower temperatures as the ambient pressure decreases.

In this way, the vacuum environment in which evaporation takes place, used by vacuum evaporator devices, requires a smaller amount of thermal energy since the fluid evaporates at a significantly lower temperature.

Even this last known type of plant for the treatment wastewater has proven in practice to be not free from drawbacks.

The main drawback is that, although smaller, the amount of energy needed to evaporate the fluid to be treated is still very high.

Nowadays, energy sustainability and the ability to consume less and less energy are extremely pressing needs in any technical field.

In fact, in the case in which the fluid comprises large quantities of polluting substances and/or the vector fluid has a high evaporation temperature, the amount of energy required to operate the evaporator apparatus remains extremely high.

### Presentation of the invention

The present invention intends to overcome the above-mentioned technical drawbacks by providing a plant for the treatment of industrial wastewater, according to claim n. 1.

A further purpose of the present invention is to provide a plant for the treatment of industrial wastewater which requires a lower quantity of energy than the plants of the known art.

A further purpose of the present invention is to provide a plant for the treatment of industrial wastewater that is structurally and functionally completely reliable.

Another purpose of the present invention is to provide a plant for the treatment of industrial wastewater which is constructively simple and economical to build.

Another purpose of the present invention is to provide a plant for the treatment of industrial wastewater which has an innovative or alternative character compared to known plants.

Another purpose of the present invention is to provide a plant for the treatment of industrial wastewater which has high energy efficiency.

Another purpose of the present invention is to provide an evaporator apparatus for plants for the treatment of wastewater that is energy efficient.

Another purpose of the present invention is to provide an evaporator apparatus for a plant for the treatment of wastewater that is structurally and functionally completely reliable.

Another purpose of the present invention is to provide an evaporator apparatus for a plant for the treatment of wastewater which has an innovative or alternative character compared to known types of plants.

These purposes, together with others that will be better clarified below, are achieved by a plant for the treatment of industrial wastewater of the type according to claim 1.

Other purposes which will be better described below are achieved by a in accordance with the dependent claims.

According to a further aspect of the present invention, an evaporator apparatus is provided, in particular intended to be installed in a plant for the treatment of industrial waste water, of the type according to claim 15.

### Brief description of the drawings

The advantages and features of the present invention will emerge clearly from the following detailed description of some preferred but not limiting configurations of a plant for the treatment of industrial wastewater with particular reference to the following drawings:

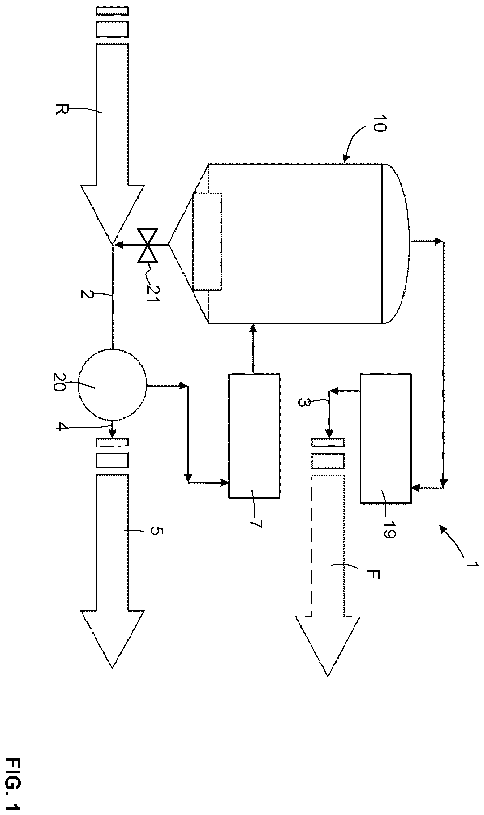

- Figure 1 shows a schematic view of a plant for the treatment of industrial wastewater, which is the object of the present invention;

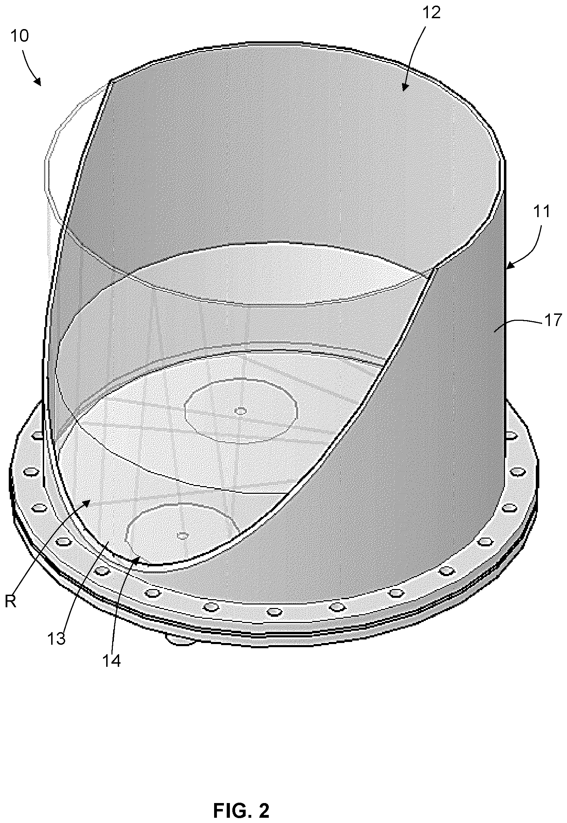

- Figure 2 shows a top perspective view of an evaporator apparatus, also object of the present invention, with some parts removed to better highlight others;

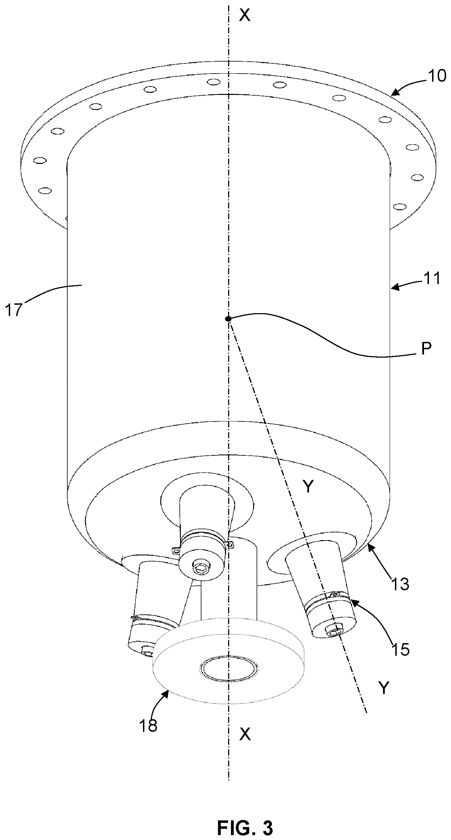

- Figure 3 shows a bottom perspective view of the evaporator apparatus of Figure 2;

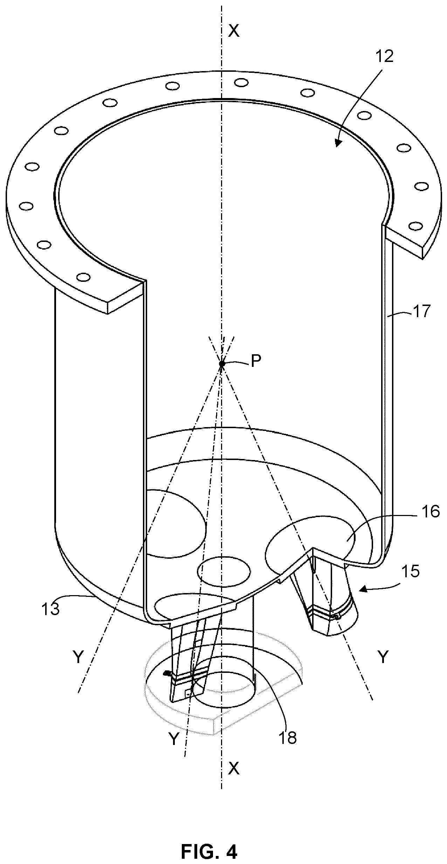

- Figure 4 shows a further top perspective view of the evaporator apparatus, with some parts removed to better highlight others;

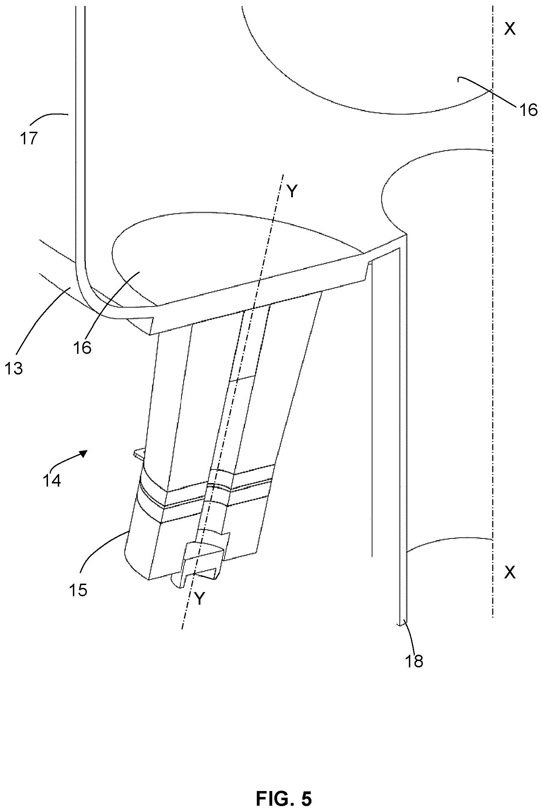

- Figure 5 shows a perspective sectional view of a detail of the evaporator apparatus, concerning means for generating ultrasound.

### Detailed description of the invention

The present invention relates to a plant for the treatment of industrial wastewater, according to the preamble of claim n. 1.

The present invention also relates to an evaporator apparatus, in particular intended to be installed in a plant for the treatment of industrial wastewater, according to the preamble of claim n. 10.

The plant according to the invention has been identified in the attached figures with the reference 1.

The plant 1 here dealt with may be advantageously used to treat a wastewater R with the aim of separating a distilled fluid F, such as water, from a mass of concentrate C, which includes one or more unwanted or polluting substances.

For example, the plant in question could be advantageously used to treat wastewater from a mechanical processing industry, for example wastewater from washing mechanical parts which contain high quantities of chromium, which is a toxic and/or harmful component which is normally separated from the water and disposed of.

The plant which is the object of the present invention allows to obtain a distilled fluid with a concentration of mass of concentrate C below predetermined threshold values (which can vary based on the substances present therein) to reuse the distilled fluid F in an industrial process and/or to release the distilled fluid into the environment without polluting it.

Therefore, the plant and the evaporator apparatus here concerned can be advantageously employed in any industry that requires the treatment of at least one wastewater R to obtain a reusable and/or easily disposable distilled fluid F.

The plant 1 for the treatment of industrial wastewater, object of the present invention, is configured to receive from an inlet section 2 a wastewater R to be treated and to send towards a first outlet section 3 a distilled fluid F and towards a second outlet section 4 a mass of concentrate C.

For example, the inlet section 2 may consist of the connection with one or more machines or production stations of an external industrial plant, which generates at least one wastewater loaded with unwanted or polluting substances and/or elements, which must be treated.

Accordingly, the first outlet section 3 and the second outlet section 4 can provide for any type of collection of the distilled fluid F or of re-direction of the same fluid towards further phases or stations.

The mass of concentrate C may include waste elements that will be appropriately disposed of, or it may include elements of interest to be recovered, such as for example precious metal powders or similar.

The plant 1 according to the invention comprises at least one evaporator apparatus 10 interposed between said inlet section 2 and said first and said second outlet sections 3, 4.

The evaporator apparatus 10 comprises a main body 11, which extends along a main development axis X starting from a bottom wall 13, and defines within it a housing volume 12, intended to contain at least said wastewater R to be treated.

Preferably, in use, the main development axis X is substantially vertical; the bottom wall 13 is defined by a lower end wall, which in particular delimits the lower part of the housing volume 12.

Advantageously, the main body 11 further comprises at least one side wall 17, which extends in a projection from the bottom wall 13 and laterally delimits the housing volume 12.

Preferably, the side wall 17 has a substantially cylindrical shape.

Obviously, the side wall 17 may have any suitable and known shape, without thereby departing from the scope of protection of the present patent application.

Preferably, the main body 11 comprises an outlet portion 18 configured to allow the outlet of the mass of concentrate C.

Advantageously, the outlet portion 18 is provided in correspondence with the bottom wall 13.

Preferably, the bottom wall 13 of the main body 11 is intended to support the mass of concentrate C following the evaporation of the wastewater R to be treated.

Advantageously, the main body 11 also comprises a further outlet portion (not illustrated in the attached figures), configured to allow the exit of the distilled fluid F.

For this purpose, the further outlet portion is preferably provided in proximity to a head wall, substantially opposite to the bottom wall 13.

Advantageously, the main body 11 also comprises an inlet portion (not illustrated in the attached figures) configured to allow the entry of the wastewater R to be treated and in particular it is obtained on the side wall 17, at a height preferably interposed between the outlet portion 18 provided on the bottom wall 13 and the further outlet portion provided in proximity of the head wall.

The plant 1 according to the invention also comprises heating means 7, operationally associated with said evaporator apparatus 10 and configured to heat said wastewater R to be treated.

Preferably, the heating means 7 are interposed between the inlet section 2 and the evaporator apparatus 10.

In accordance with a preferred embodiment, the heating means 7 comprises at least one heat exchanger (not illustrated in detail in the attached figures), for example a tube bundle or similar.

Preferably, the heating means 7 are configured to heat the wastewater R to be treated at least until a predetermined temperature is reached.

According to the invention, the evaporator apparatus 10 comprises means for generating ultrasound 14 mechanically associated with said main body 11 and configured to generate, in said housing volume, vibrations with a frequency between 1 kHz and 100 kHz.

The means for generating ultrasound 14 are configured to cooperate with said heating means 7 to bring said wastewater R at least partially to evaporation.

In this way, the plant object of the present invention allows for improving energy efficiency.

In particular, the plant according to the invention allows for a more rapid evaporation of the liquid part of the wastewater R to be treated in order to extract the distilled fluid F in a more energy-efficient manner.

In fact, the cooperation between the heat generated by the heating means 7 and the energy transported by the vibrations generated by the means for generating ultrasound 14 allows for an increase and facilitation of the evaporation of the wastewater R to be treated.

In this way, the plant according to the invention allows to overcome the drawbacks of the prior art, increasing the energy efficiency.

In more detail, the Applicant has carried out numerous tests and has been able to verify the unexpected increase in efficiency that the particular combination of heating and ultrasound allows to obtain.

In particular, the plant according to the invention allows the same quantity of wastewater R to be treated in less time.

For example, in a plant with an installed power of approximately 12kW, the installation of means for generating ultrasound 14 for a power of 360W, the increase in yield was approximately 11%.

n particular, the Applicant was able to ascertain that the means for generating ultrasound 14 allow for maximum efficiency to be obtained when they produce vibrations at a frequency between 22kHz and 30kHz.

Preferably, the plant 1 further comprises cooling means 19 operatively connected to the evaporator apparatus 10 and configured to receive the distilled fluid F and cool it.

In more detail, the cooling means 19 preferably comprise at least one heat exchanger suitable for receiving the flow of distilled fluid F, exiting the evaporator apparatus 10 at a high temperature, and preferably cooling it at least up to a preestablished temperature.

Preferably, the cooling means 19 are in fluid connection with the further outlet portion of the main body 11 of the evaporator apparatus 10.

Advantageously, the cooling means 19 are configured to condense the distilled fluid F exiting the evaporator apparatus 10 at least partially in the form of evaporated gas.

Advantageously, said means for generating ultrasound 14 are mechanically constrained to said main body 11 at said bottom wall 13, to generate said vibrations on said wastewater R to be treated present inside said housing volume 12.

Preferably, the plant 1 comprises pumping means 20 operatively connected to the evaporator apparatus 10 and configured to move the flow of fluids within the plant 1 itself.

In more detail, the pumping means 20 are interposed between the inlet section 2 and the evaporator apparatus 10 and are configured to push the wastewater R to be treated inside the main body 11 of the evaporator apparatus 10.

Preferably, the pumping means 20 are interposed between the inlet section 2 and the heating means 7 and are configured to push the wastewater R to be treated into the heat exchanger of the heating means 7 to heat the wastewater R before pushing it into the main body 11 of the evaporator apparatus 10.

Preferably, furthermore, the pumping means 20 are configured to push the mass of concentrate C exiting from the evaporator apparatus 10 towards the second outlet section 4.

Preferably, the pumping means 20 comprise at least one pump placed in fluid communication with the outlet portion 18 of the evaporator apparatus 10.

Preferably, the plant 1 comprises valve means 21 interposed between the outlet portion 18 of the evaporator apparatus 10 and the pumping means.

Advantageously, the valve means 21 can be controlled to block and/or allow the passage of the mass of concentrate between the outlet portion 18 of the evaporator apparatus 10 and the pumping means 20.

Preferably, the valve means 21 are controlled to prevent the passage of the mass of concentrate C until a threshold concentration value of the mass of concentrate is reached within the housing volume 12 of the evaporator apparatus 10.

In other words, the valve means 21 are operated to allow the passage of the mass of concentrate C, with the mass of concentrate C reaching a predetermined threshold value.

Preferably, with the valve means 21 open to allow the passage of the mass of concentrate C, further valve means prevent the passage of the wastewater R to be treated towards the evaporator apparatus 10.

For example, the concentration threshold value for the mass of concentrate C may be between approximately 1300 kg/m³ and 1800 kg/m³.

Suitably, in accordance with an embodiment of the invention not illustrated in the attached figures, the plant 1 may also comprise additional heating means, or pre-heating means, interposed between said inlet section 2 and the pumping means.

Preferably, the pre-heating means are hydraulically connected to the cooling means to exploit the heat removed from the distillate fluid F exiting the evaporator apparatus 10.

Advantageously, the evaporator apparatus 10 comprises means for generating vacuum (not illustrated in the attached figures) operatively associated with the housing volume 12.

Preferably, the means for generating vacuum are configured to lower the pressure within the housing volume 12 of the main body 11 of the evaporator apparatus 10.

More in detail, the means for generating vacuum comprise at least one compressor capable of sucking air from inside the main body 11 to create a depression between the internal pressure of the housing volume 12 and the ambient pressure outside the main body 11.

In this way, the cooperation between the means for generating vacuum, the heating means and the means for generating ultrasound allows to considerably increase the energy efficiency of the plant 1 according to the invention as well as of the evaporator apparatus 10 (also an object of the present invention).

Advantageously, said means for generating ultrasound 14 comprise at least one sonotrode 15, placed across said bottom wall 13, terminating with a vibrating element 16 arranged in correspondence with said bottom wall 13 and facing said housing volume 12.

The term "sonotrode" shall hereinafter be understood as a device capable of transmitting energy by means of vibrations.

Advantageously, said means for generating ultrasound 14 comprise a plurality of sonotrodes 15, arranged in correspondence with said bottom wall 13 around said main development axis X.

In accordance with the preferred embodiment illustrated in the attached figures, the plurality of sonotrodes 15 is arranged equidistant from each other along a circular path that develops around the main development axis X.

Advantageously, said at least one sonotrode 15 develops along a direction Y inclined with respect to said main development axis X of said main body 2.

Advantageously, each said sonotrode 15 of said plurality of sonotrodes 15 develops along a corresponding direction Y inclined with respect to said main development axis X of said main body 2, defining a plurality of different directions Y.

Advantageously, said plurality of different inclined directions Y develop substantially radially around said main development axis X.

Advantageously, said plurality of different inclined directions Y develop substantially radially around said main development axis X defining a common intersection point P with said main development axis X.

Advantageously, said vibrations generated by said means for generating ultrasound 14 have a frequency between 22kHz and 30kHz.

Advantageously, said bottom wall 13 of said main body 11 of said evaporator apparatus 10 has a substantially curved shape, so that said plurality of sonotrodes 15 of said means for generating ultrasound 14 define a plurality of different directions Y inclined with respect to said main development axis X.

The Applicant has been able to ascertain, following numerous tests, that the provision of sonotrodes 15 in the arrangement described above allows the maximum possible efficiency to be achieved, managing to cooperate excellently with the heating means and/or with the means for generating vacuum.

The present invention also relates to an evaporator apparatus intended to be installed in a plant for the treatment of industrial wastewater, in particular of the type disclosed thus far.

All features disclosed with reference to the plant for the treatment of industrial wastewater are to be understood to be disclosed, taken alone or in any combination thereof, also with reference to the evaporator apparatus, which is also an object of the present invention.

In particular, all parts of the description on the functioning of the plant 1 for the treatment of industrial wastewater are to be understood as forming part of the description of the evaporator apparatus 10 subject matter of the invention.

The evaporator apparatus 10 according to the invention is intended to be interposed between an inlet section 2, a first and a second outlet section 3, 4 of said system 1.

The evaporator apparatus 10 comprises a main body 11, which extends along a main development axis X from a bottom wall 13, and defines within it a housing volume 12, intended to contain at least said wastewater R to be treated.

According to the invention, the evaporator apparatus 10 comprises means for generating ultrasound 14 mechanically associated with said main body 11 and configured to generate, in said housing volume, vibrations with a frequency between 1 kHz and 100 kHz.

The means for generating ultrasound 14 are configured to cooperate with heating means to bring said wastewater R at least partially to evaporation.

In this way, the evaporator apparatus object of the present invention allows to improve the energy efficiency.

In particular, the evaporator apparatus according to the invention makes it possible to achieve faster evaporation of the liquid part of the wastewater R to be treated in order to extract the distilled fluid F in an energetically more advantageous manner.

In fact, the cooperation between the heat generated by the heating media 7 and the energy transported by the vibrations generated by the means for generating ultrasound 14 makes it possible to increase and facilitate the evaporation of the wastewater R to be treated.

In this way, the evaporator apparatus according to the invention makes it possible to overcome the drawbacks of the prior art by increasing the energy efficiency.

The present invention is embodiable in other variations all falling within the scope of the inventive features claimed and disclosed; these technical features may be replaced by different technically equivalent elements and the used materials; the shapes and dimensions of the invention may be any as long as they are compatible with its use.

The numbers and reference marks inserted in the claims and description are intended only to increase the clarity of the text and must not be regarded as limiting the technical interpretation of the objects or processes identified by them.

## Claims

1. Plant for the treatment of industrial wastewater (1) configured to receive from an inlet section (2) a wastewater (R) to be treated and to send towards a first outlet section (3) a distilled fluid (F) and towards a second outlet section (4) a mass of concentrate (C), said plant (1) comprising:
- at least one evaporator apparatus (10) interposed between said inlet section (2) and said first and said second outlet sections (3, 4), comprising a main body (11) extending along a main development axis (X) from a bottom wall (13), and defining within it a housing volume (12), intended to contain at least said wastewater (R) to be treated;
- heating means, operatively associated with said evaporator apparatus and configured to heat said wastewater (R) to be treated;
**characterised in that** said evaporator apparatus (10) comprises means for generating ultrasound (14) mechanically associated with said main body (11) and configured to generate, in said housing volume, vibrations with a frequency between 1 kHz and 100 kHz;
said means for generating ultrasound being configured to cooperate with said heating means to bring said wastewater (R) at least partially to evaporation.

2. Plant (1) for the treatment of industrial wastewater according to claim 1, **characterised in that** said means for generating ultrasound (14) are mechanically constrained to said main body (11) at said bottom wall (13), in order to generate said vibrations on said wastewater (R) to be treated present within said housing volume (12).

3. Plant (1) for the treatment of industrial wastewater according to claim 1 or 2, **characterised in that** said means for generating ultrasound (14) comprise at least one sonotrode (15), placed across said bottom wall (13), terminating with a vibrating element (16) arranged in correspondence with said bottom wall (13) and facing said housing volume (12).

4. Plant (1) for the treatment of industrial wastewater according to claim 1 or 2, **characterised in that** said means for generating ultrasound (14) comprise a plurality of sonotrodes (15), arranged at said bottom wall (13) around said main development axis (X).

5. Plant (1) for the treatment of industrial wastewater according to one or more of the preceding claims, **characterised in that** said at least one sonotrode (15) develops along a direction (Y) inclined with respect to said main development axis (X) of said main body (2).

6. Plant (1) for the treatment of industrial wastewater according to one or more of the preceding claims, **characterised in that** each said sonotrode (15) of said plurality of sonotrodes (15) develops along a corresponding direction (Y) inclined with respect to said main development axis (X) of said main body (2), defining a plurality of different directions Y
said plurality of different inclined directions (Y) developing substantially radially around said main development axis (X).

7. Plant (1) for the treatment of industrial wastewater according to one or more of the preceding claims, **characterised in that** said plurality of different inclined directions (Y) develop substantially radially around said main development axis (X) defining a common intersection point (P) with said main development axis (X).

8. Plant (1) for the treatment of industrial wastewater according to one or more of the preceding claims, **characterised in that** said vibrations generated by said means for generating ultrasound (14) have frequency between 22kHz and 30kHz.

9. Plant (1) for the treatment of industrial wastewater according to one or more of the preceding claims, **characterised in that** said bottom wall (13) of said main body (11) of said evaporator apparatus (10) has a substantially curved shape, so that said plurality of sonotrodes (15) of said means for generating ultrasound (14) define a plurality of different directions (Y) inclined with respect to said main development axis (X).

10. Plant (1) for the treatment of industrial wastewater according to one or more of the preceding claims, **characterised in that** it comprises valve means (21) interposed between said outlet portion (18) of said evaporator apparatus (10) and pumping means; said valve means (21) being controllable to block and/or allow the passage of the mass of concentrate between the outlet portion (18) of said evaporator apparatus (10) and the pumping means (20).

11. Plant (1) for the treatment of industrial wastewater according to one or more of the preceding claims, **characterised in that** said evaporator apparatus (10) comprises means for generating vacuum operationally associated with the housing volume (12); said means for generating vacuum being configured to lower the pressure within the housing volume (12) of the main body (11) of the evaporator apparatus (10).

12. Plant (1) for the treatment of industrial wastewater according to one or more of the preceding claims, **characterised in that** it comprises cooling means (19) operatively connected to the evaporator apparatus (10) and configured to receive the distilled fluid (F) and cool it.

13. Plant (1) for the treatment of industrial wastewater according to one or more of the preceding claims, **characterised in that** the cooperation between the heat generated by the heating means (7) and the energy transported by the vibrations generated by the means for generating ultrasound (14) allows to increase and facilitate the evaporation of the wastewater (R) to be treated.

14. Plant (1) for the treatment of industrial wastewater according to one or more of the preceding claims, **characterised in that** it comprises pumping means (20) interposed between the inlet section (2) and the heating means (7); said pumping means (20) being configured to push the wastewater (R) to be treated into a heat exchanger of said heating means (7) to heat the wastewater (R) before pushing it into the main body (11) of said evaporator apparatus (10).

15. Evaporator apparatus intended to be installed in a plant (1) for the treatment of industrial wastewater, placed between an inlet section (2), a first and a second outlet section (3, 4) of said plant, comprising a main body (11), which extends along a main development axis (X) starting from a bottom wall (13), and defines within it a housing volume (12), intended to contain at least said wastewater (R) to be treated;
**characterised in that** it comprises means for generating ultrasound (14) mechanically associated with said main body (11) and configured to generate, in said housing volume, vibrations with a frequency between 1 kHz and 100 kHz;
said means for generating ultrasound being configured to cooperate with heating means to bring said wastewater (R) at least partially to evaporation.
